# EUROPEAN PATENT APPLICATION

(11) **EP 3 521 787 A1**
(43) Date of publication of application: **07.08.2019**
(21) Application number: 18154458.6
(22) Date of filing: 31.01.2018
(51) Int. Cl.: G01K 3/04, G01K 11/12

(54) **ULTRA-THIN THERMAL HISTORY COATINGS BASED ON STRONG INTERFERENCE**

(71) Applicant: ETH Zurich, 8092 Zurich (CH)
(72) Inventor: SPOLENAK, Ralph, 8008 Zurich (CH); SCHNABEL, Volker, 8037 Zurich (CH); GALINSKI, Henning, 8706 Meilen (CH)

(57) **Abstract**

A component (1) comprises a layer structure that includes a base layer (11) and a top layer (12). The base layer is capable of acting as an optical reflector in at least a part of the frequency range between 300 and 1000 THz for at least some possible thermal histories, this layer optionally exhibiting a reflectance change when being heated above a base layer transition temperature. The top layer is a lossy dielectric layer. The layer structure forms a lossy Gires-Tournois interferometer. When the base layer acts as a reflector, the layer structure exhibits a reflectance minimum. The top layer has a thickness that is smaller than a quarter of the wavelength of the light in the material of the top layer at the frequency of the reflectance minimum. The top layer exhibits an irreversible transition when exposed to temperatures at or above a transition temperature. The transition causes a shift of the reflectance minimum. At least one parameter indicative of thermal history of the component is determined by exposing the component to an operative thermal environment, detecting at least one reflectance characteristic of the component for at least one observation frequency, and determining the thermal history parameter of the component from the at least one reflectance characteristic.

## Description

### TECHNICAL FIELD

The present invention relates to a method and a system for determining the thermal history of a component.

### PRIOR ART

In several branches of engineering, mechanical components are exposed to high temperatures. For instance, products such as boilers, engines, pipes, wind turbines or aircraft turbines can suffer from excessive thermal load, which limits their lifetime. It is therefore desirable to monitor the thermal history of such components to ensure reliable and safe operation.

US 2011/0069735 A1 discloses a method of determining the thermal history of a component. A detection material comprising an amorphous host doped with a luminescent rare earth element is applied to the component. When the component is subjected to a high-temperature environment, the amorphous host crystallizes, thereby irreversibly changing the luminescence characteristics of the detection material. The change is detected by illuminating the component with a UV laser. Rare earth elements are scarce, and the use of a UV laser requires specifically trained personnel. It is therefore desirable to devise a method of determining thermal history that is more resource-efficient and can be carried out with less sophisticated equipment.

M. Kats et al., "Nanometre optical coatings based on strong interference effects in highly absorbing media", Nature Materials 12 (2013), 20-24 (DOI: 10.1038/NMAT3443) discusses the concept of strong interference for creating colors. An ultrathin layer of a highly absorbing dielectric is applied to a metallic substrate. The thickness of the layer is much less than a quarter of the wavelength of the incident light. The layer forms a lossy Gires-Tournois interferometer that exhibits an absorption resonance. A wide variety of colors can be created by strong interference. The document is silent about applications for determining thermal history. WO 2013/184556 A1 discloses a spectral encoder based on this concept.

M. Panjan et al., "Designing the color of AlTiN hard coating through interference effect", Surface and Coatings Technology 254 (2014) 65-72 (DOI: 10.106/j.surfcoat.2014.05.065) discloses a decorative coating comprising a thin layer of AlTiN applied to a reflective surface. The decorative coating exhibits intense colors as a result of strong interference, the color depending on the thickness of the AlTiN layer. The document is silent about applications for determining thermal history.

R. Rachbauer et al., "Temperature driven evolution of the thermal, electrical, and optical properties of Ti-A-N coatings", Acta Materialia 60 (2012) 2091-2096 (DOI: 10.106/j.actamat.2012.01.005) discusses the temperature-dependent properties of Ti₁₋ₓAlₓN films. The films were relatively thick, having a thickness of approximately 3 micrometers. While the document discloses that the thermal evolution of a Ti_{0.46}Al_{0.54}N film involves changes in the optical properties of the film, there is no enhancement by strong interference, and the changes in optical properties are rather mild.

### SUMMARY OF THE INVENTION

It is an object of the present invention to provide a method for determining the thermal history of a component, the method being sensitive, resource-efficient and capable of being carried out without highly sophisticated equipment such as UV lasers. This object is achieved by a method as laid down in claim 1. Further embodiments of the invention are laid down in the dependent claims.

The present invention thus provides a method of determining a thermal history of a component with the following steps:
providing a component comprising a layer structure that includes a base layer and a top layer, the base layer being capable of acting as an optical reflector in at least a part of the frequency range between 300 and 1000 THz for at least some possible thermal histories of the component, and the top layer being a dielectric layer having a complex permittivity ε with Re(ε) > 0 and Im(ε) > 0 in said part of the frequency range, the layer structure forming a lossy Gires-Tournois interferometer and exhibiting a reflectance minimum in said part of the frequency range when the base layer acts as an optical reflector, the top layer having a thickness that is smaller than a quarter of the wavelength of light in the material of the top layer at the frequency of the reflectance minimum, wherein the top layer exhibits an irreversible transition when exposed to temperatures at or above a top layer transition temperature, and wherein the transition causes a shift of the reflectance minimum,
exposing the component to an operative thermal environment;
detecting at least one reflectance characteristic of the component for at least one observation frequency; and
determining at least one thermal history parameter that is indicative of thermal history of the component from the at least one reflectance characteristic.

The present invention utilizes the concept of strong interference in a layer structure that includes an ultrathin lossy dielectric layer for the specific application of detecting the thermal history of a component. To this end, a layer structure is provided that is specifically designed for enabling a highly sensitive determination of the thermal history. In particular, the layer structure forms a lossy Gires-Tournois interferometer. The top layer is ultrathin (less than quarter wavelength at the reflectance minimum) and consists of a lossy, semiconducting dielectric (Re(ε) > 0 and Im(ε) > 0) in the relevant frequency range. The top layer can optionally fulfil the condition Re(ε) > Im(ε). The top layer exhibits an irreversible transition, which encodes the thermal history. Through the transition, a temperature increase beyond the top layer transition temperature causes an irreversible change in the optical properties of the top layer, in particular, a change in Re(ε) and Im(ε) of the top layer, which in turn causes a shift of the reflectance minimum. Generally, the amount of change of the optical properties will depend both on the temperature to which the component has been subjected and on the time during which the component has been kept at any particular temperature. The change of the optical properties of the top layer due to the thermal history is drastically enhanced by strong interference in the lossy Gires-Tournois interferometer formed by the layer structure. Thereby a remarkable sensitivity of the proposed method is achieved.

The step of determining the thermal history parameter may include determining the shift of the reflectance minimum, and accordingly the thermal history parameter may be based on the shift of the reflectance minimum.

In particular, the temperature history of the component can be determined from the shift of the reflectance minimum ("resonance shift") by comparing a measured resonance shift with a known or previously determined functional dependence between temperatures and resonance shifts. This can involve, e.g., the use of a lookup table.

In some embodiments, the base layer acts as an optical reflector in the relevant frequency range regardless of the actual thermal history. In other embodiments, the base layer exhibits a transition when exposed to temperatures at or above a base layer transition temperature, the transition causing the base layer to exhibit a reflectance change in the relevant part of the frequency range. The said transition may be irreversible during conventional use. However, in some embodiments the transition may be reversible by subsequent treatments, e.g., intentional rapid quenching. The reflectance change can be from a low-reflectance state to a high-reflectance state. For instance, the base layer may be a semiconductor at room temperature and become a metallic-like reflector once it has been heated above the base layer transition temperature. Such a base layer will exhibit low reflectance before it has undergone the transition, i.e., it will essentially appear dark. Only after the base layer has been heated to above the base layer transition temperature, it will start to act as a reflector, causing the layer structure to form a lossy Gires-Tournois interferometer, thus exhibiting strong interference.

Preferably the base layer transition temperature is below the top layer transition temperature. This enables, for instance, the following scheme of determining thermal history: (a) As long as the base layer is not strongly reflective, the component will appear essentially dark, indicating that the component has never been heated above the base layer transition temperature. If the base layer transition temperature is such that normal operating conditions expose the component to temperatures above the base layer transition temperature, this allows the conclusion that the component has not yet been in use at normal operating conditions. (b) Once the base layer has become strongly reflective, strong interference is used to monitor whether and to which extent the component has been exposed to excessive temperatures. For instance, if the component appears blue, this may indicate that the component has been exposed to normal operating temperatures, but not yet above such temperatures. If the component exhibits color deviations from blue, this may indicate that the component has been exposed to excessive temperatures, the degree of color deviation indicating the degree to which the component has been overheated. In summary, two transitions may be used to monitor thermal history, the transition of the base layer being a sharp transition (the base layer becoming reflective) and the transition of the top layer being a gradual transition (the top layer changing its optical properties).

When the base layer is in a high-reflectance state, it preferably acts as a metallic-like optical reflector in at least part of the frequency range between 300 and 1000 THz. To this end, the base layer does not need to be a perfect metallic conductor. In some embodiments, the base layer has a plasma frequency ωₚ in the frequency range between 300 and 1000 THz and a complex permittivity ε with Re(ε) < 0 in a portion of the frequency range below the plasma frequency (ωₚ), leading to a strongly frequency-selective reflection behavior of the base layer.

In some embodiments, the base layer may consist of a transition metal nitride, in particular, a nitride of at least one transition metal selected from Ti, Zr, Hf, V, Sc, Cr, and Ta, more particularly TiN, ZrN or HfN. In other embodiments, the base layer may consist of a phase change material. In particular, the phase change material may be based on Ge. More specifically, the phase change material may be a Ge-Sb-Te phase change material. Ge-Sb-Te phase change materials exhibit a transition between a low-reflectance amorphous state and a high-reflectance crystalline state. The base layer should preferably be sufficiently thick to be optically dense. In particular, the thickness of the base layer is preferably at least 200 nm.

The transition of the top layer preferably occurs at a temperature above 25 °C, more preferably above 400 °C, in particular above 600 °C. The transition can be a phase transition. In particular, the transition can be a decomposition, in particular, a spinodal decomposition, i.e. a transition that involves unmixing from one single, homogeneous solid phase into two heterogeneous coexisting domains. The degree of unmixing depends both on the temperature to which the component has been exposed as well as to the time span during which the component has been exposed to a particular temperature. The unmixing influences the optical properties, in particular, Re(ε) and Im(ε), and thereby determines the spectral position of the reflectance minimum.

Advantageously, the top layer may have a composition comprising:
at least one transition metal selected from Ti, Zr, Hf, V, Sc, Cr, and Ta;
at least one of Al and Si; and
at least one of N, O, C, and B.

Many compositions in this class exhibit decomposition upon heating.

In particular, the top layer can have a composition of formula

(TM₁₋ₓAl_{x-z}Si_{z})(N_{1-y}O_{y})ₐ,

where TM is at least one transition metal selected from Ti, Zr, Hf, V, Sc, Cr and Ta, and where 0.8<a<1.2 (preferably 0.95<a<1.05), 0 < x < 0.7 (preferably 0.1 < x < 0.7, more preferred 0.4 < x < 0.6), 0 ≤ z < 0.5 (preferably 0 ≤ z < 0.2) with the proviso that z ≤ x, and 0 ≤ y < 0.5 (preferably 0 ≤ y < 0.2).

In some embodiments, the top layer has a composition of one of the following formulas:
Ti₁₋ₓAlₓN with 0.1 < x < 0.7 (preferably 0.4 < x < 0.6),
Zr₁₋ₓAlₓN with 0.1 < x < 0.68 (preferably 0.4 < x < 0.6),
Hf₁₋ₓAlₓN with 0.1 < x < 0.62 (preferably 0.4 < x < 0.6), and
V₁₋ₓAlₓN with 0.1 < x < 0.63 (preferably 0.4 < x < 0.6).

In another aspect, the present invention provides a system for determining the thermal history of a component, the system comprising:
a component comprising a layer structure that includes a base layer and a top layer, the base layer acting as an optical reflector in at least a part of the frequency range between 300 and 1000 THz, and the top layer being a dielectric layer having a complex permittivity ε with Re(ε) > 0 and Im(ε) > 0 in said frequency range, the layer structure exhibiting a reflectance minimum in the frequency range between 300 and 1000 THz, the top layer having a thickness that is smaller than a quarter of the wavelength of light in the material of the top layer at the frequency of the reflectance minimum, wherein the top layer exhibits an irreversible transition when exposed to temperatures at or above a transition temperature, and wherein the transition causes a shift of the reflectance minimum,
a detector for detecting at least one reflectance characteristic of the component for at least one observation frequency; and
an analyzer configured to determine a temperature history of the component from the at least one reflectance characteristic.

The detector may be a spectrophotometer, enabling the detection of the at least one reflectance characteristic of the component for multiple observation frequencies. Many different types of spectrophotometers are known in the art, and the present invention is not limited to any particular type of spectrophotometer.

The analyzer may be implemented as a digital computer, e.g., as a dedicated digital signal processor or as a general-purpose computer, and the digital computer may be appropriately programmed to determine the temperature history of the component from the at least one reflectance characteristic. In particular, the digital computer can comprise a processor and a memory in which computer-executable instructions are stored that, when carried out by the processor, cause the processor to determine the temperature history of the component from the at least one reflectance characteristic received from the detector. However, the present invention is not limited to any particular implementation of the analyzer.

In some embodiments, the analyzer (and in particular, the associated software) can comprise:
a shift determination module for determining the shift of the reflectance minimum; and
a history determination module for determining the temperature history of the component from the shift of the reflectance minimum.

All considerations concerning the structure of the component that are discussed above in connection with the method of the present invention equally apply to the system of the present invention. This includes, in particular, all considerations concerning the layer structure and the compositions of the individual layers.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic diagram illustrating a layer structure including a base layer and a top layer, and illustrating multiple reflections of an incoming light beam inside the layer structure;
- Fig. 2: shows two diagrams illustrating the reflectance of a TiAlN/TiN layer structure as a function of wavelength for different thicknesses of the TiAlN top layer; part (a): calculated values; part (b): measured values;
- Fig. 3: shows a schematic diagram visualizing the spinodal decomposition of TiAlN at elevated temperatures;
- Fig. 4: shows a diagram illustrating the reflectance of a TiAlN/TiN layer structure as a function of wavelength after annealing at different annealing temperatures;
- Fig. 5: shows a diagram illustrating the position of the reflectance minimum as a function of temperature for different thicknesses of the TiAlN top layer;
- Fig. 6: shows three diagrams illustrating the values of various properties as a function of temperature; part (a): normalized resonance shift; part (b): hardness; part (c): resistivity;
- Fig. 7: shows two diagrams illustrating correlations between structural parameters and normalized resonance shift; part (a): resistivity vs. normalized resonance shift; part (b): hardness vs. normalized resonance shift;
- Fig. 8: shows a diagram illustrating the calculated reflectance of a TiAlN/ZrN layer structure as a function of wavelength for different thicknesses of the TiAlN top layer;
- Fig. 9: shows a diagram illustrating the calculated reflectance of a TiAlN/HfN layer structure as a function of wavelength for different thicknesses of the TiAlN top layer;
- Fig. 10: shows a diagram illustrating the calculated reflectance of a TiAlON/TiN layer structure as a function of wavelength for different thicknesses of the TiAlON top layer; and
- Fig. 11: shows a diagram illustrating the calculated reflectance of a TiAlON/HfN layer structure as a function of wavelength for different thicknesses of the TiAlN top layer;
- Fig. 12: shows a schematic diagram illustrating a first embodiment of a device for determining the thermal history of the component;
- Fig. 13: shows a schematic diagram illustrating a second embodiment of a device for determining the thermal history of the component;
- Fig. 14: shows a schematic diagram illustrating a third embodiment of a device for determining the thermal history of the component; and
- Fig. 15: shows a schematic diagram illustrating an embodiment of an analyzer that may be used in conjunction with the present invention.

### DESCRIPTION OF PREFERRED EMBODIMENTS

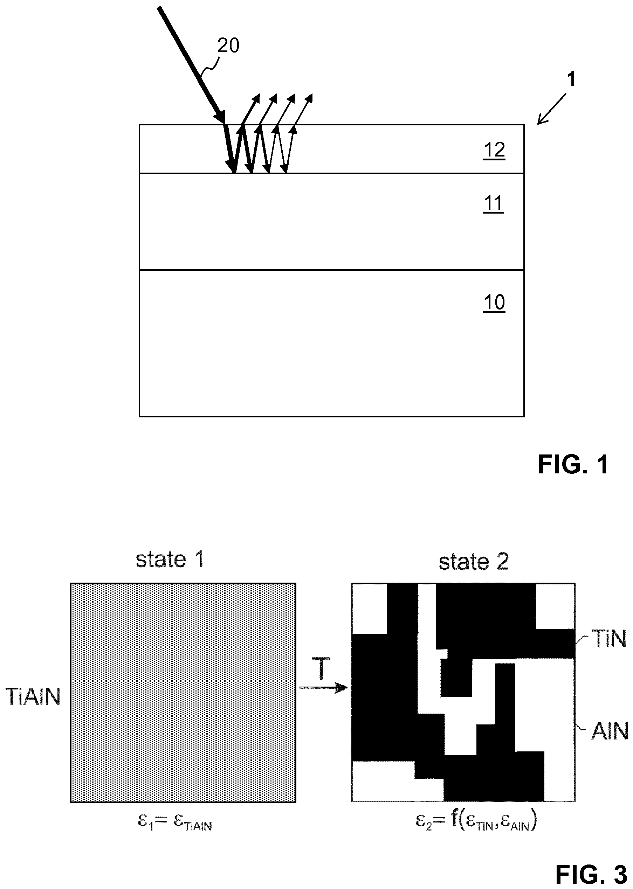

Figure 1 schematically illustrates the surface structure of a component 1 to be used in the context of the present invention. The component 1 comprises a substrate 10, to which a coating defining a double-layer structure with a base layer 11 and a top layer 12 has been applied. The component may have arbitrary shape. In particular, the component may be a mechanical part that is subjected to a thermal environment during operation, the thermal environment involving an exposition of the component 1 to elevated temperatures. The elevated temperatures may be the result of the action of an external heat source, of internal combustion, of friction or of any other mechanism that generates heat in the component and/or its environment.

The base layer 11 may consist of a transition metal nitride, in particular, TiN. TiN is a remarkable material. Even though it exhibits strong and partially covalent bonding, its specific resistivity is lower than that of Ti. TiN also shows high activity for oxygen reduction and low activation energies of H₂ grain-boundary diffusion, making it suitable for catalytic applications. The high melting point of 2930 °C in combination with interband transitions similar to Au feature TiN as a metallic-like, plasmonic refractory material. High hardness, scratch, wear and oxidation resistance make TiN also an excellent coating material for drills, cutting tools and bearings.

The top layer 12 may consist of a mixed nitride of at least one transition metal and aluminum and/or silicon, possibly augmented by further elements like O, C, or B. In particular, the top layer may consist of a mixed nitride of titanium and aluminum, e.g., Ti₁₋ₓAlₓN with 0.1 < x < 0.7. In the following, any mixed nitride of titanium and aluminum will be designated as TiAlN for simplicity. TiAlN is a semiconducting, highly lossy dielectric with Re(ε) > 0, Im(ε) > 0, and Re(ε) > Im(ε) in the frequency range of 300 to 1000 THz, i.e. in the visible or NIR range of the electromagnetic spectrum. Further properties of TiAIN will be explained below.

The substrate 10 may consist of any material that is compatible with the base layer 11. For instance, the substrate may consist of stainless steel or silicon. If the base layer 11 is incompatible with the substrate 10, one or more intermediate layers may be provided between the substrate 10 and the base layer 11 to improve compatibility. In some embodiment, the substrate is transparent. In other embodiments, no substrate is present (see below).

One or more transparent further layers (not shown) may be applied on top of the top layer. The further layer should exhibit no or only minimal loss in the relevant frequency range. Preferably, the imaginary part of the permittivity, Im(ε), of the further layer is equal or close to zero. For instance, the further layer may consist of glass. The further layer does not need to be thin, nor does it need to have uniform thickness. In particular, the transparent further layer may be a structural part of the component whose thermal history is to be monitored. In embodiments with a comparatively thick further layer on top of the top layer, a substrate may be completely absent. Such embodiments can be manufactured by first providing the transparent further layer, applying the top layer to the transparent further layer "from below", an then applying the base layer to the top layer "from below". In particular, the terms "base layer" and "top layer" do not limit the invention to a particular order of manufacture of these layers. These terms rather relate to the observation direction, observation always taking place from the top side, i.e., light enters and leaves the top layer always from the side that faces away from the base layer.

The layer structure forms a lossy Gires-Tournois interferometer. Many interferometers are comprised of lossless dielectrics and metallic reflectors. The low absorption in a lossless dielectric layer results in a trivial interface phase shift of either 0 or π upon each reflection and transmission. Single or multiple passes through the lossless dielectric layer can cause destructive or constructive interference. The trivial phase shift also determines the minimum film thickness for destructive interference, which is a quarter wavelength, λ/4. However, highly absorbing dielectrics, such as TiAIN, with a complex refractive index n = n + ik and n ≈ k, create non-trivial phase shifts. Hence, the thickness for absorption resonance can be much smaller than λ/4. The combination of an ultra-thin lossy dielectric and appropriately chosen reflective metallic materials leads to bright color appearance and low iridescence. The low iridescence emerges from a limited angular-dependent phase difference that partial waves can accumulate in ultra-thin films.

Thin-film interference in the layer structure 11, 12 is illustrated in Fig. 1. A light beam 20 enters the top layer 12 from above, propagates to the interface between the top layer 12 and the base layer 11, is reflected at the interface and propagates back through the top layer to the interface between the top layer and the surrounding air (or between the top layer and a further layer on top of the top layer). During each round trip, the light will accumulate a total phase shift that consists of a propagation phase shift due to propagation through the top layer and an interface phase shift due to reflection at the interfaces. At the same time, the light is strongly absorbed due to the lossy nature of the dielectric material of the top layer 12. When the total phase shift is approximately zero (modulo 2π), an absorption resonance will occur, causing a reflectance minimum. The reflectance minimum is advantageously in the frequency range between 300 and 1000 THz.

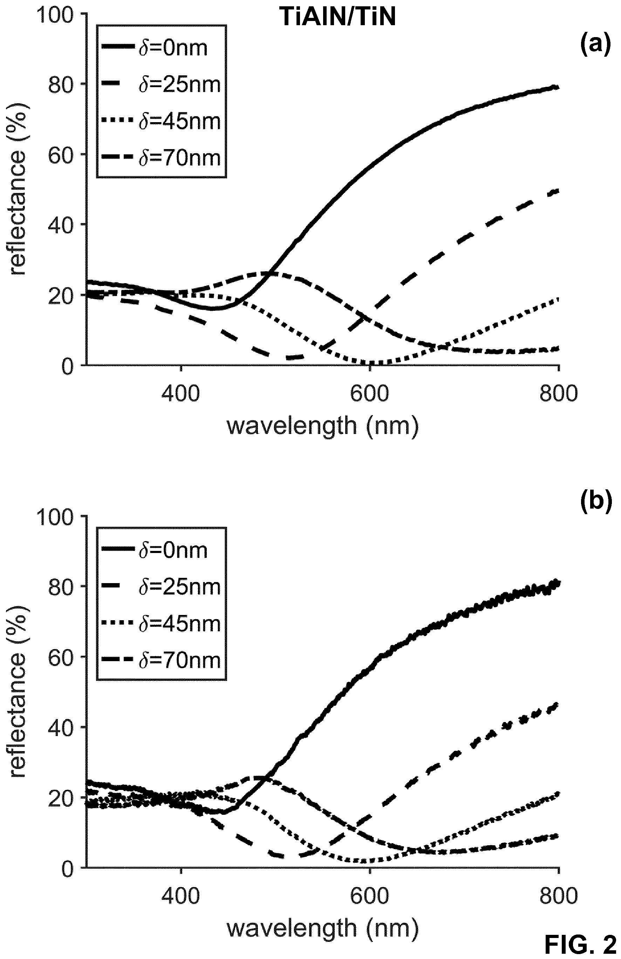

Figure 2 illustrates the dependence of the reflectance of a TiN/TiAlN layer structure 11, 12 upon the wavelength.

Part (a) shows the results of calculations for different thicknesses δ of the TiAlN top layer 12. In these calculations, formulas were employed that are well-known from optics textbooks and reproduced, e.g., in the above-mentioned article by Kats et al. at Equation (1).

Part (b) shows the results of actual near-zero angle reflectivity measurements for these values of δ For these measurements, transition metal nitrides TiN and (Ti_{0.61}Al_{0.39})(N_{0.96}O_{0.07}) (composition as determined by Rutherford backscattering spectrometry) were synthesized by magnetron sputtering in an ultra-high vacuum system. As a substrate, Si wafers with 50 nm diffusion barriers of SiO₂ and Si₃N₄ were used. The TiN layer was 500 nm thick, whereas the TiAlN film thickness δ was varied. The samples had bright color appearance at room temperature, the color strongly depending on the thickness of the TiAlN layer.

As apparent from Fig. 2, with increasing TiAlN thickness the reflectance minimum shifts to higher wavelength from 445 to 519, 591 and 678 nm for the resonators with a 25, 45 and 70 nm thick TiAlN layer, respectively. There is a good agreement between measured and calculated reflectance spectra. Hence, it is possible to predict the thickness-dependent reflectance minima and color appearance in strong interference resonators based on transition metal nitrides. Furthermore, the evaluation presented in Fig. 2 reveals that the attenuation and phase shift accumulation in TiAlN is effective in modifying the reflectivity of TiN with TiAlN thicknesses much smaller than λ/4. The thickness of the TiAlN absorbing layer can be tuned to cover large parts of the visible spectrum of light, leading to bright color appearance.

Another important property of TiAlN and of many other mixed transition metal nitrides is that they can undergo spinodal decomposition. Fig. 3 illustrates, in a highly schematic manner, a spinodal decomposition process for TiAlN. TiAlN is a meta-stable solid solution of c-TiN and c-AlN (left, grey area), which undergoes a thermally activated decomposition into domains of TiN (right, black areas) and AlN (right, white areas). Pure AlN is thermodynamically stable in a wurzite structure. However, through a non-equilibrium synthesis, e.g. a magnetron sputtering method, AlN can be forced into the body-centered cubic structure of TiN. Subsequent thermal activation enables diffusion, which leads to the coherence-strain induced decomposition of the TiAlN solid solution into a heterogeneous mixture of a TiN enriched c-TiAlN and an AlN enriched c-TiAlN domains.

Before decomposition, TiAIN has a complex permittivity ε₁ = ε_{TiAlN} with Re(ε₁) > 0, Im(ε₁)>0, and Re(ε₁)>Im(ε₁) in the range between 300 and 1000 THz (vacuum wavelength 300-1000 nm). After decomposition, the material has a different complex permittivity ε₂ = f(ε_{TiN}, ε_{AIN}), which is a function of the complex permittivity of TiN, ε_{TiN}, and the complex permittivity of AlN, ε_{AlN}. This change of the complex permittivity causes a shift of the reflectance minimum.

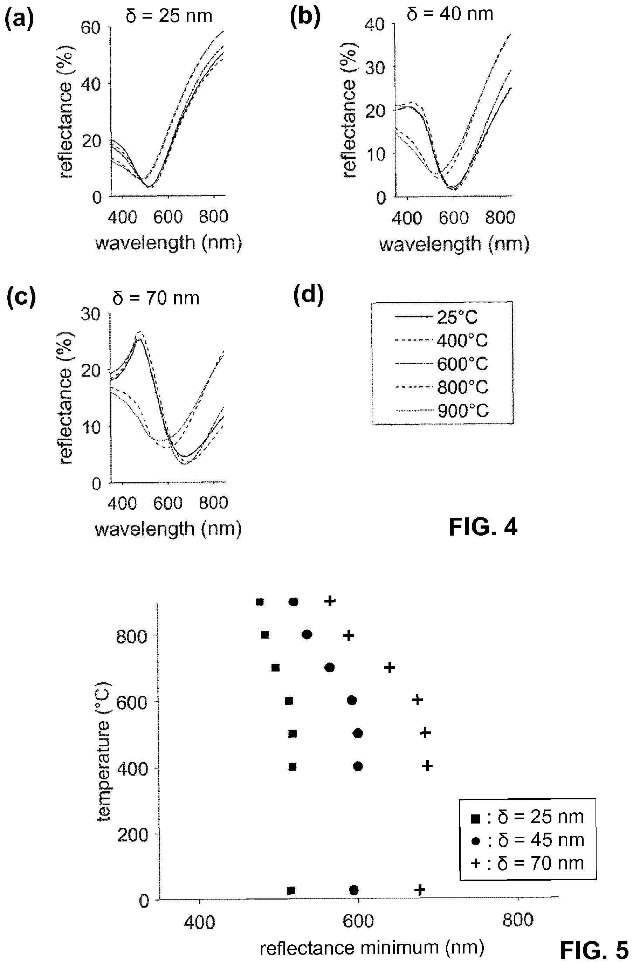

To evaluate the effects of spinodal decomposition upon the TiAlN/TiN strong interference resonators, the as deposited thin films were annealed at temperatures between 400 and 900 °C for 1 hour. Fig. 4 shows the measured reflectance of the TiAlN/TiN films as a function of annealing temperature. The results are from measurements of TiAlN films with a thickness of 25 nm (part a), 45 nm (part b) and 70 nm (part c), respectively. The measured wavelengths were 350 to 850 nm. The minimum reflected intensity of 2% was observed for the as-deposited resonator with TiAlN thickness of 45 nm at a wavelength of 591 nm. For all strong interference resonators, a shift of the reflectance minimum towards lower wavelengths was observed, starting from 600 °C. The coating with a TiAlN film thickness of 70 nm exhibits the most strongly pronounced shift in reflectance minimum. However, the reflectance minimum itself is less pronounced as compared to the resonators with 25 and 45 nm TiAIN layer thickness. Hence, the thinner (δ=25 and 45 nm) resonators exhibited a brighter color appearance and a more visible thermally induced color evolution. The thermally active resonators with TiAlN film thicknesses of 25, 45 and 70 nm exhibited a gradual color change from purple to orange, blue to purple and green to dark blue, respectively. The shifts of the reflectance minimum are quantitatively shown in Figure 5.

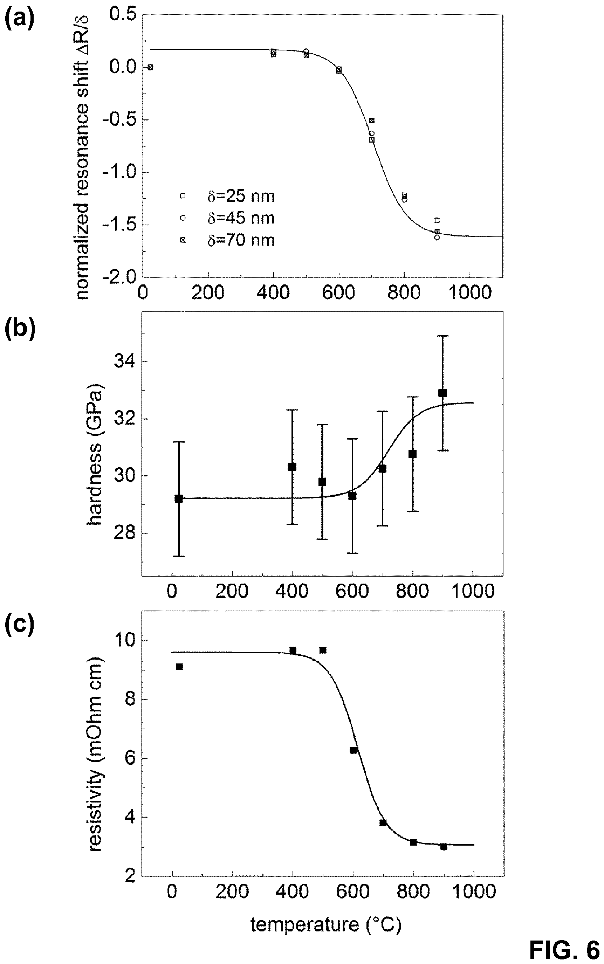

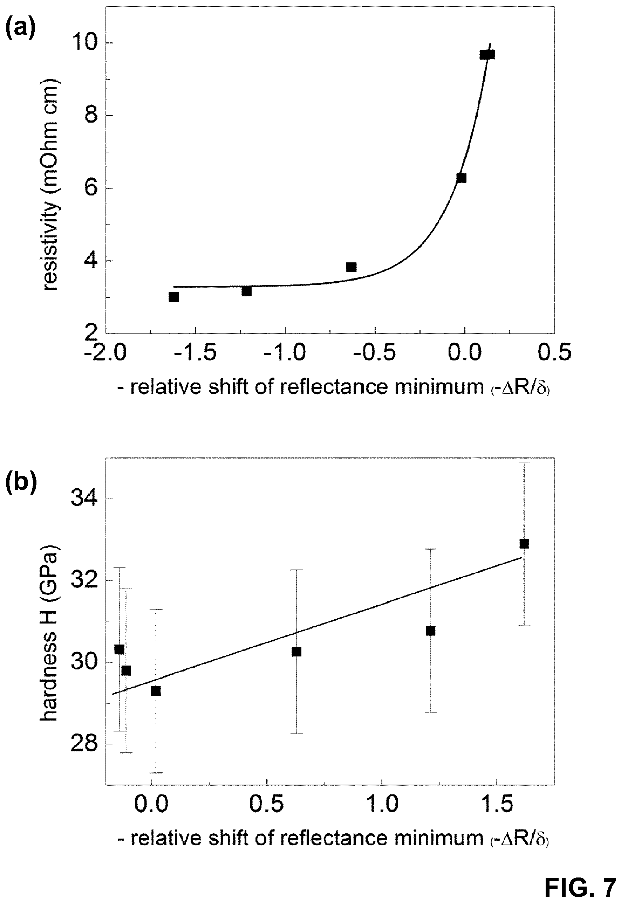

As apparent from Figs. 6 and 7, these shifts strongly correlate with material properties like hardness and resistivity. In Fig. 6 (a) the normalized resonance shift, i.e., the change in the spectral position of the reflectance minimum, ΔR, divided by the layer thickness, δ, is shown as a function of annealing temperature. Starting from 600 °C, a strong resonance shift is apparent with rising temperature. In Fig. 6(b), the hardness, as measured by a depth-sensing nanoindenter equipped with a Berkovich tip, is shown as a function of annealing temperature. Despite large measurement uncertainties, a clear trend is visible that hardness increases with annealing temperature. In Fig. 6(c), the resistivity is shown as a function of annealing temperature. Above 600 °C there is a pronounced drop in resistivity.

In Fig. 7, these quantities are directly correlated. Figure 7 (a) shows the correlation of resistivity and resonance shift, Fig. 7 (b) shows a correlation of hardness and resonance shift. It is clearly apparent that there is a strong correlation between these quantities. From these correlations it is evident that transition-metal-nitride based strong interference resonators are effective as thermally active signaling materials. These signaling materials are able to spectrally encode internal changes in microstructure and hardness.

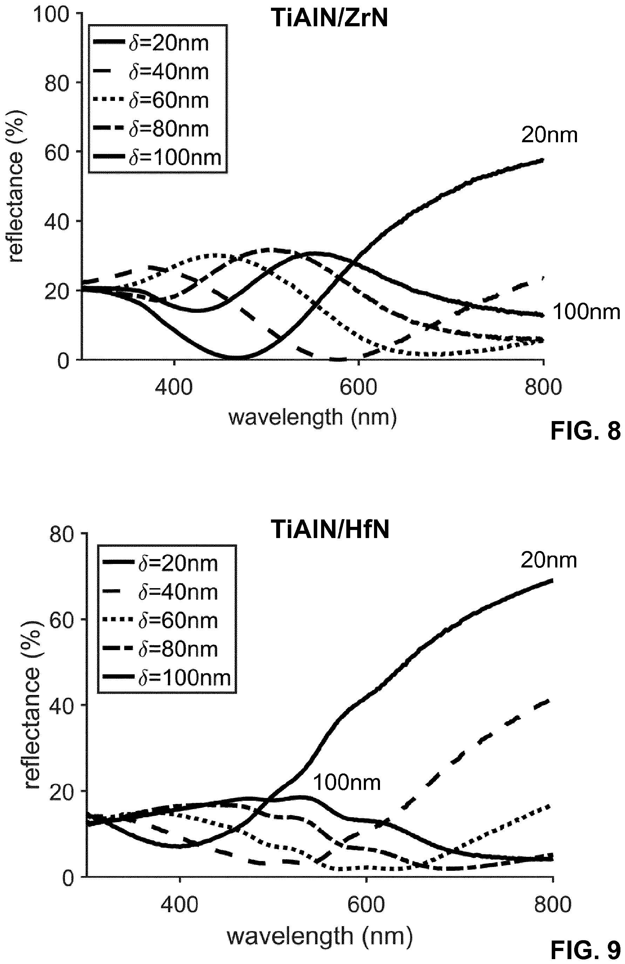

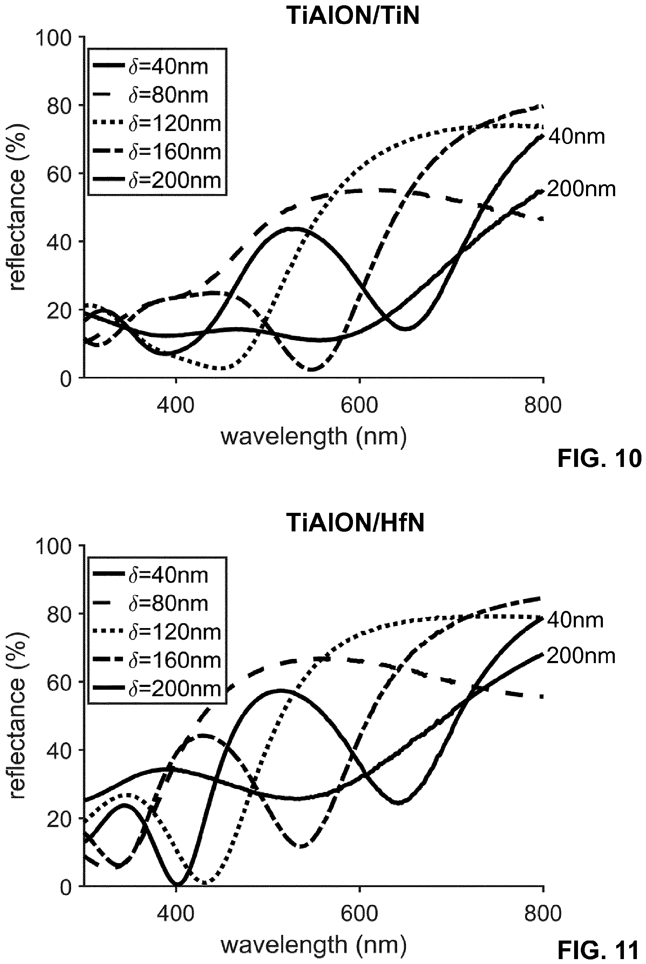

Figures 8-11 illustrate that the above considerations are not only valid for the TiN/TiAlN system, but can be generalized to other systems involving transition metal nitrides, possibly modified by further elements. Fig. 8 shows calculated reflectance spectra for a TiAlN layer with varying thickness on a ZrN base layer; Fig. 9 shows calculated reflectance spectra for a TiAlN layer with varying thickness on a HfN base layer; Fig. 10 shows calculated reflectance spectra for a TiAlON layer (deposited by reactive sputtering from a TiAl (50:50) compound target in an Ar+N₂+O₂ atmosphere, as disclosed in A. Biswas et al., "Spectroscopic ellipsometric characterization of TiAlN/TiAlON/Si3N4 tandem absorber for solar selective applications", Applied Surface Science 254 (2008) 1694-1699, doi:10.1016/j.apsusc.2007.07.109) with varying thickness on a TiN base layer; and Fig. 11 shows calculated reflectance spectra for a TiAlON layer (as defined above) with varying thickness on a HfN base layer. It is clearly apparent that all these systems exhibit strong reflectance minima, which will shift upon decomposition of the top layer. The concept of the present invention can therefore be applied to a wide variety of elemental compositions.

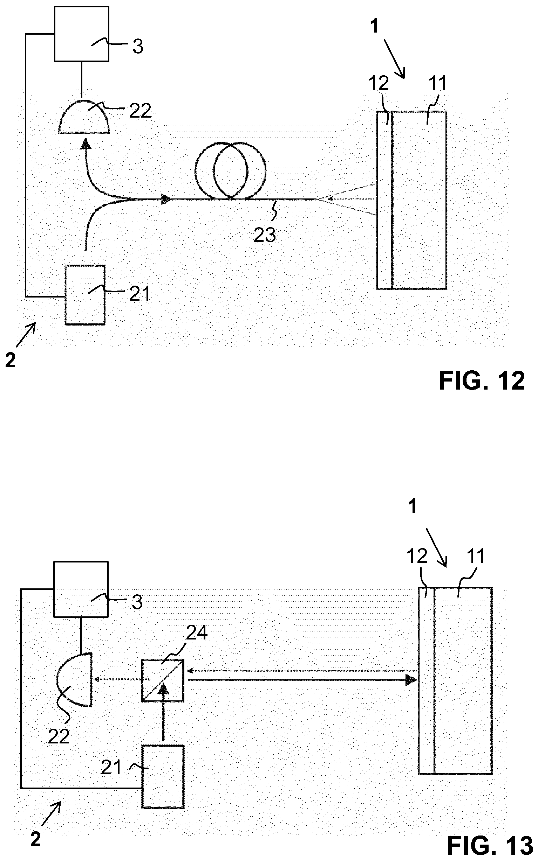

Figures 12-14 show three different possible embodiments of setups for detecting at least one reflectance characteristic of the component 1 in a spectrally resolved manner. Each of these setups includes a spectrophotometer 2. The spectrophotometer can include a light source 21 for generating light at multiple wavelengths, e.g. an incandescent lightbulb, a photodetector 22 and a monochromator at the light source or at the photodetector (not shown). Both the light source 21 and the photodetector 22 are coupled to an analyzer 3 that will be explained in more detail in conjunction with Fig. 5. In the embodiment of Fig. 2, the light source 21 shines light through at least one optical fiber 23 onto the surface of the component 1, and the photodetector 22 receives light reflected from the surface of the component 1 through the same or a different fiber 23. In the embodiment of Fig. 3, light is irradiated from the light source 21 onto the surface of the component 1 via a semitransparent mirror 24. Light reflected from the surface of the component 1 is transmitted through the semitransparent mirror 24 to the photodetector 22. In the embodiment of Fig. 4, light is irradiated from the light source 21 at an angle onto the surface of the component 1, and reflected light is likewise detected by the photodetector 22 at an angle.

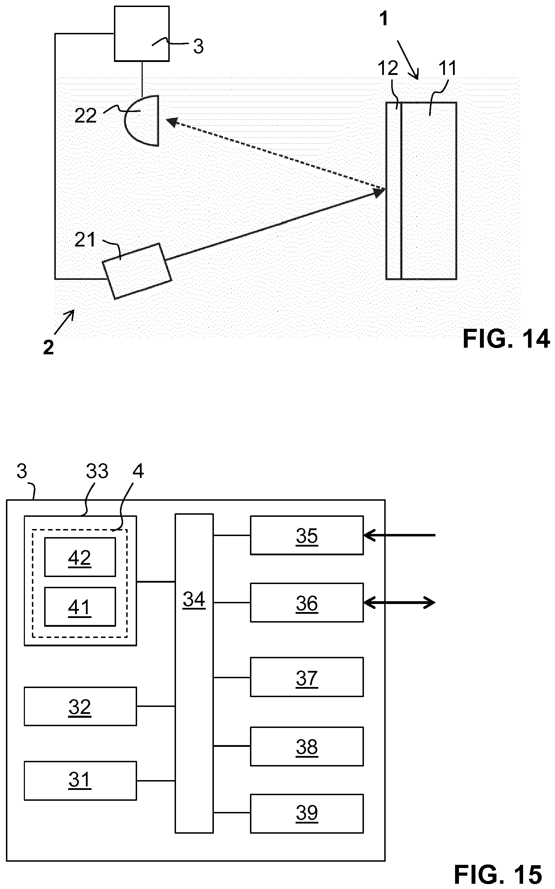

A possible embodiment of an analyzer 3 that can be used in conjunction with the present invention is illustrated in Fig. 15. In this embodiment, the analyzer includes a computer running application-specific software for analyzing the signals from the spectrophotometer 2. The computer may include one or more processors 31, system memory including read-only memory (ROM) 32 and random access memory (RAM) 33, and a system bus 34 that couples various system components, including the system memory, to the processors 31. The analyzer may further comprise one or more interfaces, such as an I/O interface 35 for communicating with the spectrophotometer, a network interface 36 for communicating with a network, for instance a LAN or WLAN, a storage interface 37 for a non-volatile storage medium such as a hard disk or a solid state drive for storing programs and data, a video interface 38 for connecting a display, and an input interface 39 for connecting an input device such as a keyboard or a mouse. All these interfaces may also be coupled to the system bus 34.

The computer may run application-specific software for determining the temperature history of the component from the at least one reflectance characteristic recorded by the photodetector 22. At runtime, at least part of the software 4 may be stored in computer-executable form in RAM 33. The software may include, in particular, a shift determination module 41 for determining the shift of the reflectance minimum and a history determination module 42 for determining the temperature history of the component 1 from the shift of the reflectance minimum.

The shift determination module 41 may receive reflectance data at a plurality of frequencies or wavelengths from the spectrophotometer 2. It may determine a position of the reflectance minimum from the reflectance data, e.g., by performing a fit of a model spectrum to the reflectance data. It may further store the determined position of the reflectance minimum that have been determined at a plurality of points in time and may calculate a shift of the reflectance minimum from a reference value.

The history determination module 42 may receive the calculated shift from the shift determination module 41 and may calculate a temperature value from the calculated shift, e.g., by employing the functional relationship illustrated in Fig. 6 (a). The calculated temperature value can then be outputted as an indicator of the thermal history to which the component 1 has been subjected.

While the invention has been described with reference to preferred embodiments thereof, it is to be understood that the invention is not limited to these embodiments, and that various modifications are possible without leaving the scope of the invention.

## Claims

1. A method of determining a thermal history of a component, the method comprising:
providing a component (1) comprising a layer structure that includes a base layer (11) and a top layer (12), the base layer (11) being capable of acting as an optical reflector in at least a part of the frequency range between 300 and 1000 THz for at least some possible thermal histories of the component (1), and the top layer (12) being a dielectric layer having a complex permittivity (ε) with Re(ε) > 0 and Im(ε) > 0 in said part of the frequency range, the layer structure forming a lossy Gires-Tournois interferometer and exhibiting a reflectance minimum in said part of the frequency range when the base layer acts as an optical reflector, the top layer (12) having a thickness that is smaller than a quarter of the wavelength of the light in the material of the top layer (12) at the frequency of the reflectance minimum, wherein the top layer (12) exhibits an irreversible transition when exposed to temperatures at or above a top layer transition temperature, and wherein the transition causes a shift of the reflectance minimum,
exposing the component (1) to an operative thermal environment;
detecting at least one reflectance characteristic of the component (1) for at least one observation frequency; and
determining at least one thermal history parameter indicative of thermal history of the component (1) from the at least one reflectance characteristic.

2. The method of claim 1,
wherein determining the at least one thermal history parameter includes determining the shift of the reflectance minimum; and
wherein the thermal history parameter is based on the shift of the reflectance minimum.

3. The method of claim 1 or 2, wherein the base layer (11) exhibits a transition when exposed to temperatures at or above a base layer transition temperature, the transition of the base layer causing the base layer to exhibit a reflectance change in said part of the frequency range.

4. The method of any one of the preceding claims, wherein the base layer (11) has a plasma frequency (ωₚ) in the frequency range between 300 and 1000 THz and a complex permittivity (ε) with Re(ε) < 0 in a frequency range below the plasma frequency (ωₚ) when it acts as an optical reflector.

5. The method of any one of the preceding claims, wherein the base layer (11) consists of a transition metal nitride, in particular, TiN, ZrN or HfN.

6. The method of any one of the preceding claims, wherein the irreversible transition of the top layer (12) is a decomposition.

7. The method of any one of the preceding claims, wherein the top layer (12) has a composition comprising:
at least one transition metal selected from Ti, Zr, Hf, V, Sc, Cr, and Ta;
at least one of Al and Si; and
at least one of N, O, C, and B.

8. The method of any one of the preceding claims, wherein the top layer (12) has a composition of formula
(TM₁₋ₓAl_{x-z}Si_{z})(N_{1-y}O_{y})ₐ,
where TM is at least one of Ti, Zr, Hf, V, Sc, Cr and Ta, and
where 0.8<a<1.2, 0 < x < 0.7, 0 ≤ z < 0.5, and 0 ≤ y < 0.5, with the proviso that z≤x,
in particular, a composition of one of the following formulas:
Ti₁₋ₓAlₓN with 0.1 < x < 0.7,
Zr₁₋ₓAlₓN with 0.1 < x < 0.68,
Hf₁₋ₓAlₓN with 0.1 < x < 0.62, and
V₁₋ₓAlₓN with 0.1 < x < 0.63.

9. A system for determining a thermal history of a component, the system comprising:
a component (1) comprising a layer structure that includes a base layer (11) and a top layer (12), the base layer (11) being capable of acting as an optical reflector in at least a part of the frequency range between 300 and 1000 THz for at least some possible thermal histories of the component (1), and the top layer (12) being a dielectric layer having a complex permittivity (ε) with Re(ε) > 0 and Im(ε) > 0 in said part of the frequency range, the layer structure forming a lossy Gires-Tournois interferometer and exhibiting a reflectance minimum in said part of the frequency range when the base layer acts as an optical reflector, the top layer having a thickness that is smaller than a quarter of the wavelength of light in the material of the top layer at the frequency of the reflectance minimum, wherein the top layer (12) exhibits an irreversible transition when exposed to temperatures at or above a transition temperature, and wherein the transition causes a shift of the reflectance minimum,
a detector (2) for detecting at least one reflectance characteristic of the component (1) for at least one observation frequency; and
an analyzer (3) configured to determine at least one thermal history parameter indicative of thermal history of the component (1) from the at least one reflectance characteristic.

10. The system of claim 9, wherein the detector (2) is a spectrophotometer.

11. The system of claim 9 or 10, wherein the analyzer comprises:
a shift determination module (41) for determining the shift of the reflectance minimum; and
a history determination module (42) for determining at least one thermal history parameter from the shift of the reflectance minimum.

12. The system of any one of claims 9-11, wherein the base layer (11) exhibits a transition when exposed to temperatures at or above a base layer transition temperature, the transition of the base layer causing the base layer to exhibit a reflectance change in said part of the frequency range, and/orwherein the base layer (11) has a plasma frequency (ωₚ) in the frequency range between 300 and 1000 THz and a complex permittivity (ε) with Re(ε) < 0 in a frequency range below the plasma frequency (ωₚ) when it acts as an optical reflector.

13. The system of any one of claims 9-12, wherein the base layer (11) consists of a transition metal nitride, in particular, TiN, ZrN or HfN.

14. The system of any one of claims 9-13, wherein the irreversible transition of the top layer (12) is a decomposition.

15. The system of any one of claims 9-14, wherein the top layer (12) has a composition comprising:
at least one transition metal selected from Ti, Zr, Hf, V, Sc, Cr, and Ta;
at least one of Al and Si; and
at least one of N, O, C, and B,
in particular, wherein the top layer (12) has a composition of formula
(TM₁₋ₓAl_{x-z}Si_{z})(N_{1-y}O_{y}),
where TM is at least one of Ti, Zr, Hf, V, Sc, Cr and Ta, and
where 0 < x < 0.7, 0 ≤ z < 0.5, and 0 ≤ y < 0.5, with the proviso that z ≤ x,
in particular, a composition of one of the following formulas:
Ti₁₋ₓAlₓN with 0.1 < x < 0.7,
Zr₁₋ₓAlₓN with 0.1 < x < 0.68,
Hf₁₋ₓAlₓN with 0.1 < x < 0.62, and
V₁₋ₓAlₓN with 0.1 < x < 0.63.
